# NEUE EUROPÄISCHE PATENTSCHRIFT

(11) **EP 0 670 352 B2**
(45) Veröffentlichungstag und Bekanntmachung des Hinweises auf die Entscheidung über den Einspruch: **28.01.2004**
(45) Hinweis auf die Patenterteilung: 09.09.1998
(21) Anmeldenummer: 94103351.6
(22) Anmeldetag: 05.03.1994
(51) Int. Cl.: C09D 5/02

(54) **Beschichtungsmittelgranulat und Verfahren zu dessen Herstellung**
Coating granules and process of manufacturing
Revêtement granulé et procédé de fabrication

(43) Veröffentlichungstag der Anmeldung: 06.09.1995
(73) Patentinhaber: ispo GmbH, D-65830 Kriftel (DE)
(72) Erfinder: Köllreuter, Andreas, Dipl.-Ing., D-63263 Neu-Isenburg (DE); Born, Andrea, D-65627 Elbtal (DE); Wink, Reinhard, D-65239 Massenheim (DE)
(74) Vertreter: Weber, Dieter, Dr.

(56) Entgegenhaltungen:
- EP-A- 0 230 220
- GB-A- 974 162
- US-A- 3 287 290

## Beschreibung

Die Erfindung betrifft ein Verfahren zur Herstellung eines festen Beschichtungsmittels, das beispielsweise als Farbe, Lacke, Putz, Grundierung, Fußbodenbeschichtung oder dergleichen eingesetzt werden kann und vor der Verwendung an Ort und Stelle mit Wasser angemacht wird.

Flüssige Beschichtungsmittel, wie beispielsweise Farben für den Innen- und Außenanstrich von Gebäuden, erfordern voluminöse und flüssigkeitsdichte Verpackungen, wie Kunststoffeimer, Tonnen oder Dosen, und haben ein hohes Gewicht. Man ist daher bemüht, die aufwendigen Verpackungen zu vereinfachen und die Transportkosten zu reduzieren. Beispielsweise wäre es von Vorteil, derartige Beschichtungsmittel in trockener Form vorliegen zu haben und an der Verwendungsstelle leicht mit Wasser zu der erwünschten Flüssigkonsistenz anmachen zu können. Dies erlaubt eine Verpakkung in Beuteln oder Tüten aus Kunststoffolien oder Papier und reduziert erheblich die Transportkosten, da das Wasser der Beschichtungsmittel nicht mittransportiert werden muß.

Pulverige Beschichtungsmaterialien, die an der Baustelle mit Wasser angemacht werden, sind beispielsweise aus der EP-A-0 230 220 bekannt Sie sind wasserfreie Gemische, die neben mineralischen Zuschlagstoffen, wie Füllstoffen und/oder Pigmenten, ein Bindemittel, ein wasserlösliches Netzmittel und ein Verdickungsmittel auf Polysaccharidbasis enthalten. Diese pulverförmigen Beschichtungsmittel werden durch trokkenes Vermischen der Einzelbestandteile gewonnen. Auch die gemäß der GB-A-974 162 durch Sprühtrocknen erhaltenen Beschichtungsmittel sind Pulvergemische, die im wesentlichen frei von Agglomeration sind.

Solche pulverförmigen Beschichtungsmittel besitzen verschiedene Nachteile. Da sie aus einem Gemisch feinteiliger Pulver der Einzelkomponenten bestehen, neigen sie zum Stauben, was beim baustellenseitigen Anmachen der Beschichtungsmittel mit Wasser für die Arbeiter unangenehm und auf die Dauer gesundheitsgefährdend ist. Infolge der unterschiedlichen Komgrößen und spezifischen Gewichte der Einzelkomponenten besteht weiterhin die Gefahr, daß sich solche pufverförmigen Beschichtungsmittel bei der Lagerung und insbesondere beim Transport entmischen, so daß die Zusammensetzung innerhalb einer Verpackung in unterschiedlichen Höhen verschieden ist. Dies bedeutet, daß die Endzusammensetzung des Beschichtungsmittels unterschiedlich sein kann, wenn an der Baustelle nicht der gesamte Verpackungsinhalt auf einmal mit Wasser angemacht wird, sondern das pulverförmige Beschichtungsmittel anteilweise der Packung entnommen und angemacht wird. Auf diese Weise können fehlerhafte Anstriche resultieren, da die Beschichtungsmittel trotz korrekter Einwaage der Einzelkomponenten nach dem baustellenseitigen Anmachen mit Wasser nicht die optimale Zusammensetzung haben.

Schließlich kann ein Nachteil bekannter pulverförmiger Beschichtungsmittel darin bestehen, daß die Trockengemische schwierig mit Wasser anzumachen sind, da einzelne Komponenten sich langsamer als die anderen lösen und Pigment/Füllstoff-Agglomerate enthalten können, so daß entweder lange Mischzeiten verbunden mit hoher Mischenergie angewendet werden müssen oder die Gefahr besteht, daß bestimmte Komponenten nach der Mischzeit nicht in kolloidaler oder gelöster Form vorliegen.

Die der Erfindung zugrundeliegende Aufgabe bestand daher darin, ein festes, mit Wasser anmachbares Beschichtungsmittel zu bekommen, das baustellenseitig leicht mit Wasser zu der erwünschten flüssigen Konsistenz anmachbar ist, im trockenen Zustand nicht staubt und sich beim Transport nicht oder nur ganz geringfügig entmischt.

Erfindungsgemäß wird diese Aufgabe durch das in Auspruch 1 beschriebene Verfahren gelöst.

Die weiteren Additive können wasserlöslich oder nicht mit Wasser mischbar sein.

Die in Wasser dispergierbaren festen, rieselfähigen Beschichtungsmittel lassen sich baustellenseitig leicht mit Wasser zu der erwünschten Konsistenz auflösen, wobei die wasserlöslichen Bestandteile vollständig und rasch in Lösung gehen. Sie sind nichtstaubend und lassen sich daher an der Baustelle leicht verarbeiten, und sie entmischen sich nicht, da jedes Korn des Granulats beim Transport im wesentlichen seine aus der Fertigung stammende Zusammensetzung behält und die Körner untereinander im wesentlichen gleiche Zusammensetzung haben.

Der Wassergehalt des Beschichtungsmittelgranulats ist wesentlich für die leichte baustellenseitige Anmachbarkeit des Gemisches mit Wasser. Bevorzugt liegt der Wassergehalt der Beschichtungsmittelgranulate im Bereich von 0,1 bis 10, besonders im Bereich von 0,1 bis 5 Gew.-%.

Die Einzelkomponenten der Beschichtungsmittelgranulate sind so auszuwählen, daß der pH-Wert beim Anmachen in einer beliebigen Wassermenge nicht stark sauer ist und daher unabhängig von der verwendeten Wassermenge stets oberhalb 6, vorzugsweise im pH-Bereich von 7 bis 12 liegt.

Die Zusammensetzung des Gemisches hängt wesentlich von der Verwendung des fertigen Beschichtungsmittels ab, d. h. ob es sich um Grundierungen, Farben, Lacke, Putze, Fußbodenbeschichtungen oder andere Beschichtungsmittel handelt. Bei den Farben kommt es wieder darauf an, ob es sich um Dispersionsfarben, Emulsionsfarben, Silikatfarben oder dergleichen handelt.

Von dem Begriff der wasserunlöslichen mineralischen Zuschlagstoffe sollen mineralische Füllstoffe und Pigmente, wie Calciumcarbonat, Aluminiumsilikat, Schwerspat, Talkum oder Glimmer, Titandioxid, Eisenoxid, Kaolin, Quarz, Siliciumdioxid, Bariumsulfat, Aluminiumhydroxid, Perlit, Christobalit, Wollastonit, Faserfüllstoffe oder Glaspulver umfaßt werden, wobei bevorzugte Komgrößen der Zuschlagstoffe im Bereich von 0,001 bis 6 mm liegen. Selbstverständlich können die Gemische auch zusätzlich bestimmte organische Füllstoffe, Pigmente oder andere Farbmittel enthalten, wenn dies erwünscht ist. Der Gehalt des Granulats, bezogen auf Trockengewicht, an Zuschlagstoff liegt vorzugsweise im Bereich von 20 bis 99, 9, besonders von 20 bis 90 Gew.-%. Im Falle von Farben besteht ein wesentlicher Anteil des Zuschlagstoffes aus dem Pigment Titandioxid und/oder anderen Farbpigmenten, wobei der Rest des Zuschlagstoffes aus mineralischen Füllstoffen, wie Calciumcarbonat, Talkum, Glimmer, der Marmormehl, besteht.

Das Bindemittel ist im Regelfall ein organisches oder partiell-organisches Polymer, kann aber auch anorganischer Natur sein. Beispielsweise im Falle von Silikatfarben kann es aus Kaliumsilikat bestehen. Als organische Bindemittel sind beispielsweise Homopolymere oder Copolymere von Vinylacetat, Vinylversatat, Vinyllaurat, Acryl- oder Methacrylsäureestern, Vinylchlorid, Acrylnitril, Butadien und Styrol sowie Polysiloxane und Kombinationen hiervon zu nennen. Im Regelfall handelt es sich bei den Bindemitteln um thermoplastische Kunstharze. Das Bindemittel ist, bezogen auf das Trockengewicht des Granulats, in einer Menge von 3 bis 99,9, vorzugsweise von 3 bis 70, besonders von 5 bis 20 Gew.-% enthalten.

Ein Netzmittel bzw. Emulgator dient dazu, das fertige Beschichtungsmittel zu stabilisieren. Geeignete Netzmittel sind bekannt und sind in dem Granulat, bezogen auf das Trockengewicht desselben, vorzugsweise in einer Menge von 0,01 bis 10, besonders 0,1 bis 2 Gew.-% enthalten.

Zusätzlich können die Beschichtungsmittelgranulate weitere übliche Bestandteile von Beschichtungsmittein enthalten, wie beispielsweise Verdickungsmittel, besonders solche auf Polysaccharidbasis, wie Xanthan-Gum oder Guar-Derivate, insbesondere in einer Menge von 0,01 bis 3 Gew.-%, bezogen auf das Trockengewicht des Granulats. Andere Bestandteile sind beispielsweise Entschäumer, wie amorphe Kieselsäure, die insbesondere in einer Menge von 0,01 bis 3, vorzugsweise 0,1 bis 2 Gew-% enthalten sind.

Weiterhin enthalten die Beschichtungsmittel zweckmäßig ein Schutzkolloid, z. B. Polyvinylalkohol, vorzugsweise in einer Menge von 0,01 bis 5 Gew.-%, und/oder ein Hydrophobierungsmittel, wie eine siliciumorganische Verbindung, vorzugsweise in einer Menge von 0,01 bis 10, besonders 0,01 bis 3 Gew.-% und/oder wenigstens ein Biozid, wie ein Topf-Konservierungsmittel, vorzugsweise in einer Menge von 0,01 bis 5 Gew.-%.

Es ist zweckmäßig, daß die wasserlöslichen Bestandteile des Granulats eine Teilchengröße im Bereich von 0,001 bis 6 mm besitzen, um die Anmachgeschwindigkeit an der Baustelle zu verkürzen.

Das erfindungsgemäße Verfahren zur Herstellung der oben beschriebenen in Wasser dispergierbaren Beschichtungsmittelgranulate besteht darin, daß man ein pulverförmiges Gemisch eines Teils oder aller der Bestandteile des Beschichtungsmittels als Trägermaterial mit einer die übrigen oder alle oder einen Teil aller Komponenten des Beschichtungsmittels enthaltenden wäßrigen Dispersion oder mit Wasser mittels eines Gasstromes bei einer Temperatur von 30 bis 800 °C in Berührung bringt und dabei so viel Wasser entzieht, daß die Restfeuchte des gesamten Behandlungsgemisches im Bereich von 0,01 bis 15 Gew.-% liegt und das Behandlungsgemisch in fester, rieselförmiger Form vorliegt.

Bei der Durchführung des Verfahrens geht man zweckmäßig so vor, daß man einen Teil der Bestandteile des Beschichtungsmittels in Form eines pulverförmigen Gemisches mit einerwäßrigen Dispersion der restlichen Komponenten des Beschichtungsgemisches mittels des Gasstromes in Berührung bringt.

Statt dessen kann man aber auch so vorgehen, daß man die Gesamtheit der Rezeptur in Pulverform mit einem Gasstrom in Berührung bringt, der eine wäßrige Dispersion der gesamten Rezeptur oder lediglich Wasser enthält. Im letzteren Falle löst das Wasser während der Behandlung einen Teil der löslichen Bestandteile der Rezeptur, was zur Granulatbildung führt.

Eine bevorzugte Ausführungsform des Verfahrens besteht darin, daß man das pulverförmige Gemisch von Rezepturbestandteilen in der Trockenapparatur vorlegt und durch Einblasen eines Gasstromes von unten in eine Wirbelschicht überführt, in die mit dem Gasstrom oder seitlich bzw. von oben mit einem weiteren Gasstrom die übrigen Komponenten des Beschichtungsmittels bzw. alle Komponenten des Beschichtungsmittels in wäßriger Dispersion bzw. Wasser alleine eingespritzt werden. Als Gasstrom wird zweckmäßig ein Luftstrom verwendet. Das Trocknungsverfahren kann bei Atmosphärendruck oder Unterdruck durchgeführt werden. Bezüglich der Komponentenauswahl im Hinblick auf die Endverwendung und den pH-Wert gelten die obigen Ausführungen.

Die Restfeuchte des Granulates wird günstigerweise auf 0,1 bis 10, vorzugsweise 0,1 bis 5 Gew.-% eingestellt. Die Temperatur des Trocknungsverfahrens liegt zweckmäßig im Bereich von 30 bis 100° C, vorzugsweise 40 bis 80° C. Das Verfahren kann ansatzweise oder kontinuierlich durchgeführt werden.

### Beispiel

16 Gewichtsteile eines Dispersionspulvers auf der Basis eines Mischpolymers von Ethylen, Vinylchlorid und Vinyllaurat werden mit 0,5 Gewichtsteilen eines pulverförmigen Polysaccharid-Verdickungsmittel in Pulverform vermischt. Dieses Trockengemisch wird im Verfahren vorgelegt.

Getrennt hiervon wird eine wäßrige Dispersion aus 35 Gewichtsteilen Wasser, 2 Gewichtsteilen Polyvinylalkohol, 0,5 Gewichtsteilen einer Polyvinylpyrrolidon-Netzmittellösung, 0,5 Gewichtsteilen Lithiumcarbonat, 0,5 Gewichtsteilen Entschäumer auf der Basis eines Polyetherderivates eines Fettalkohols und einer Fettsäure, 2 Gewichtsteilen einer amorphen pyrogenen Kieselsäure, 12 Gewichtsteilen Talkum/Dolomit-Verwachsung, 9 Gewichtsteilen Magnesium-Aluminiumsilikathydrat, 3 Gewichtsteilen Calciumcarbonat und 19 Gewichtsteilen Titandioxid hergestellt.

Unter Verwendung von Druckluft wird das Trockengemisch in Form einer Wirbelschicht fluidisiert. Mit Hilfe eines seitlich mit 5,8 bar eingeführten Druckluftstromes wird die wäßrige Dispersion in die Wirbelschicht eingesprüht. Die Zulufttemperatur beträgt etwa 55° C, die Ablufttemperatur etwa 28° C. Man bekommt dabei ein Granulat mit einer Komgröße eines mittleren Durchmessers von etwa 0,5 mm mit einer Temperatur von etwa 28° C und einem Restfeuchtegehalt von etwa 3 %.

Wenn man das Granulat mit Wasser im Verhältnis 1:1 mischt, ergibt sich eine hochwertige Innenfarbe mit normgerechten Eigenschaften.

## Patentansprüche

1. Verfahren zur herstellung eines in Wasser dispergierbaren Beschichtungsmittels, bestehend aus einem rieselfähigen, Bindemittel, wenigstens einem Wasserunlöslichen mineralischen Zuschlagstoff, und weitere Additive enthaltenden Gemisch mit einem Gehalt an freiem oder gebundenem Wasser von 0,01 bis 15 Gew.%, wobei das Beschichtungsmittel in Form eines Granulats vorliegt, dessen Körner untereinander im wesentlichen gleiche Zusammensetzung haben und das beim Dispergieren in einer beliebigen Menge Wasser einen pH-Wert oberhalb 6 ergibt, **dadurch gekennzeichnet, daß** man ein pulverförmiges Gemisch von Bestandteilen des Beschichtungsmittels als Trägermaterial in einer Wirbelschicht mit einer die restlichen oder alle oder einen Teil aller Bestandteile des Beschichtungsmittels enthaltenden wäßrigen Dispersion oder mit Wasser mittels eines Gasstromes bei einer Temperatur von 30 bis 800 °C in Berührung bringt und dabei so viel Wasser entzieht, daß die Restfeuchte des gesamten Behandlungsgemisches im obigen Bereich liegt und das Behandlungsgemisch in rieselförmiger Granulatform vorliegt.

2. Verfahren nach Anspruch 1, **dadurch gekennzeichnet, daß** man dem Behandlungsgemisch Wasser bis zu einer Restfeuchte von 0,1 bis 10, vorzugsweise 0,1 bis 5 Gew.-% entzieht.

3. Verfahren nach einem der Ansprüche 1 und 2, **dadurch gekennzeichnet, daß** man bei einer Temperatur von 30 bis 100° C, vorzugsweise 40 bis 80 °C arbeitet.

4. Verfahren nach Anspruch 1, **dadurch gekennzeichnet, daß** das erhaltene Granulat den mineralischen Zuschlagstoff, vorzugsweise Füllstoffe und/oder Pigmente, in einer Menge von 20 bis 99,9, vorzugsweise 20 bis 90 Gew.-%, bezogen auf die Trockensubstanz des Beschichtungsmittels enthält.

5. Verfahren nach einem der Ansprüche 1 bis 4, **dadurch gekennzeichnet, daß** das erhaltene Granulat das Bindemittel in einer Menge von 3 bis 99,9, vorzugsweise 3 bis 70 Gew.-%, bezogen auf die Trockensubstanz des Beschichtungsmittels, enthält.

6. Verfahren nach einem der Ansprüche 1 bis 5, **dadurch gekennzeichnet, daß** das erhaltene Granulat ein Netzmittel in einer Menge von 0,01 bis 10 Gew.-%, bezogen auf das Trockengewicht des Beschichtungsmittels, enthält.

7. Verfahren nach einem der Ansprüche 1 bis 6, **dadurch gekennzeichnet, daß** das erhaltene Granulat als Bindemittel ein organisches oder partiell-organisches Polymer oder ein anorganisches Bindemittel oder Kombinationen hiervon enthält.

8. Verfahren nach einem der Ansprüche 1 bis 7, **dadurch gekennzeichnet, daß** das erhaltene Granulat zusätzlich ein oder mehrere Verdickungsmittel, vorzugsweise ein Polysaccharid, enthält.

9. Verfahren nach Anspruch 8, **dadurch gekennzeichnet, daß** das erhaltene Granulat das Verdickungsmittel in einer Menge von 0,01 bis 3 Gew.-% enthält.

10. Verfahren nach einem der Ansprüche 1 bis 9, **dadurch gekennzeichnet, daß** das erhaltene Granulat zusätzlich ein Entschäumungsmittel, vorzugsweise in einer Menge von 0,01 bis 3, besonders 0,1 bis 2 Gew.-%, enthält.

11. Verfahren nach einem der Ansprüche 1 bis 10, **dadurch gekennzeichnet, daß** das erhaltene Granulat als weiteres Additiv wenigstens ein Schutzkolloid, vorzugsweiwse in einer Menge von 0,01 bis 5 Gew.-%, enthält.

12. Verfahren nach einem der Ansprüche 1 bis 11, **dadurch gekennzeichnet, daß** das erhaltene Granulat zusätzlich ein Hydrophobierungsmittel, vorzugsweise in einer Menge von 0,01 bis 10, besonders von 0,01 bis 3 Gew.-%, enthält.

13. Verfahren nach Anspruch 12, **dadurch gekennzeichnet, daß** das erhaltene Granulat als Hydrophobierungsmittel eine siliciumorganische Verbindung enthält.

14. Verfahren nach einem der Ansprüche 1 bis 13, **dadurch gekennzeichnet, daß** das erhaltene Granulat zusätzlich wenigstens ein Biozid, vorzugsweise insgesamt in einer Menge von 0,01 bis 5 Gew.-% enthält.

## Claims

1. A process for the production of a coating agent dispersible in water and comprising a tricklable mixture containing binding agent, at least one water-insoluble mineral additive and further additives, and having a content of free or bound water of 0.01 to 15 % by weight, the coating agent existing in the form of a granulate, the grains of which are of substantially the same composition as each other and which gives a pH value above 6 upon dispersion in any amount of water, **characterized in that** a powder mixture of constituents of the coating agent is contacted within a fluidized bed as carrier material with an aqueous dispersion containing the remaining or all or a portion of all constituents of the coating agent or with water by means of a gaseous stream at a temperature of 30 to 800 °C and that so much water is removed that the residual moisture content of the entire treatment mixture is in the above range.

2. A process according to claim 1, **characterized in that** water is withdrawn from the treatment mixture until the residual moisture content is 0.1 to 10, preferably 0.1 to 5 % by weight.

3. A process according to one of the claims 1 and 2, **characterized in that** operation is effected at a temperature of 30 to 100 °C, preferably 40 to 80 °C.

4. A process according to claim 1, **characterized in that** the contained granulate contains the mineral additive, preferably fillers and/or pigments, in an amount of 20 to 99.9, preferably 20 to 90 % by weight with respect to the dry substance of the coating agent.

5. A process according to one of the claims 1 to 4, **characterized in that** the obtained granulate contains the binding agent in an amount of 3 to 99.9, preferably 3 to 70 % by weight, with respect to the dry substance of the coating agent.

6. A process according to one of the claims 1 to 5, **characterized in that** the obtained granulate contains a wetting agent in an amount of 0.01 to 10 % by weight, in an amount of from 0.01 to 10 % by weight, with respect to the dry weight of the coating agent.

7. A process according to one of the claims 1 to 6, **characterized in that** the obtained granulate contains as binding agent an organic or partially organic polymer or an inorganic binding agent or combinations thereof.

8. A process according to one of the claims 1 to 7, **characterized in that** the obtained granulate contains additionally one or more thickening agents, preferably a polysaccharide.

9. A process according to claim 8, **characterized in that** the obtained granulate contains the thickening agent in an amount of 0.01 to 3 by weight.

10. A process according to one of the claims 1 to 9, **characterized in that** the obtained granulate contains additionally an anti-foam agent, preferably in an amount of 0.01 to 3, especially 0.1 to 2 % by weight.

11. A process according to one of the claims 1 to 10, **characterized in that** the obtained granulate contains as further additive at least one protective colloid, preferably in an amount of 0.01 to 5 % by weight.

12. A process according to one of the claims 1 to 11, **characterized in that** the obtained granulate contains additionally a hydrophobing agent, preferably in an amount of 0.01 to 10, especially from 0.01 to 3 % by weight.

13. A process according to claim 12, **characterized in that** the obtained granulate contains an organo silicon compound as hydrophobing agent.

14. A process according to claim 12, **characterized in that** the obtained granulate contains as hydrophobing agent at least one biocide, preferably overall in an amount of 0.01 to 5 % by weight.

## Revendications

1. Procédé de préparation d'un produit de revêtement dispersable dans l'eau constitué d'un liant coulant d'au moins un additif minéral insoluble dans l'eau et d'un mélange contenant d'autres additifs avec une teneur d'eau libre ou liée de 0,01 à 15 % en poids, où le produit de revêtement se présente sous la forme d'un granulé dont les grains ont entre eux pour l'essentiel la même composition, et qui en cas de dispersion dans une quantité quelconque d'eau donne un pH supérieur à 6, **caractérisé en ce qu'**on met en contact un mélange pulvérulent de composants du produit de revêtement comme support dans une couche fluidisée avec une dispersion aqueuse contenant les autres composants, ou la totalité, ou une partie des composants du produit de revêtement, ou avec de l'eau, au moyen d'un courant gazeux à une température de 30 à 800°C, et **en ce qu'**on retire alors suffisamment d'eau pour que l'humidité résiduelle du mélange de traitement total se situe dans une gamme supérieure et que le mélange de traitement se présente sous forme de granulé coulant.

2. Procédé selon la revendication 1, **caractérisé en ce qu'**on prélève du mélange de traitement de l'eau jusqu'à une humidité résiduelle de 0,1 à 10, de préférence de 0,1 à 5 % en poids.

3. Procédé selon l'une des revendications 1 et 2, **caractérisé en ce qu'**on travaille à une température de 30 à 100°C, de préférence de 40 à 80°C.

4. Procédé selon la revendication 1, **caractérisé en ce que** le granulé obtenu contient des additifs minéralisés, de préférence des charges et/ou des pigments, en une quantité de 20 à 99,9, de préférence de 20 à 90 % en poids, par rapport à la substance sèche du produit de revêtement.

5. Procédé selon l'une des revendications 1 à 4, **caractérisé en ce que** le granulé obtenu contient un liant en une quantité de 3 à 99,9, de préférence de 3 à 70 % en poids, par rapport à la substance sèche du produit de revêtement.

6. Procédé selon l'une des revendications 1 à 5, **caractérisé en ce que** le granulé obtenu contient un agent mouillant en une quantité de 0,01 à 10 % en poids, par rapport au poids sec du produit de revêtement.

7. Procédé selon l'une des revendications 1 à 6, **caractérisé en ce que** le granulé obtenu contient comme liant un polymère organique ou partiellement organique, ou un liant inorganique, ou l'une de leurs combinaisons.

8. Procédé selon l'une des revendications 1 à 7, **caractérisé en ce que** le granulé obtenu contient en outre un ou plusieurs épaississants, de préférence un polysaccharide.

9. Procédé selon la revendication 8, **caractérisé en ce que** le granulé obtenu contient l'agent épaississant en une quantité de 0,01 à 3 % en poids.

10. Procédé selon l'une des revendications 1 à 9, **caractérisé en ce que** le granulé obtenu contient en outre un antimousse, de préférence en une quantité de 0,01 à 3, en particulier de 0,1 à 2 % en poids.

11. Procédé selon l'une des revendications 1 à 10, **caractérisé en ce que** le granulé obtenu contient comme autre additif au moins un colloïde protecteur, de préférence en une quantité de 0,01 à 5 % en poids.

12. Procédé selon l'une des revendications 1 à 11, **caractérisé en ce que** le granulé obtenu contient en outre un agent d'hydrophobisation, de préférence en une quantité de 0,01 à 10, en particulier de 0,01 à 3 % en poids.

13. Procédé selon la revendication 12, **caractérisé en ce que** le granulé obtenu contient comme agent d'hydrophobisation un composé d'organosilicium.

14. Procédé selon l'une des revendications 1 à 13, **caractérisé en ce que** le granulé obtenu contient en outré au moins un agent biocide, de préférence au total en une quantité de 0,01 à 5 % en poids.
